# EUROPEAN PATENT SPECIFICATION

(11) **EP 2 952 963 B1**
(45) Date of publication and mention of the grant of the patent: **30.12.2020**
(21) Application number: 14305834.5
(22) Date of filing: 03.06.2014
(51) Int. Cl.: G03F 7/20, G03F 1/36, G03F 1/80, G06F 30/398, H01J 37/317

(54) **Method for calculating the metrics of an ic manufacturing process**
Verfahren zur Berechnung der Metrik für ein IC-Herstellungsverfahren
Procédé pour calculer les paramètres d'un procédé de fabrication de circuits intégrés

(43) Date of publication of application: 09.12.2015
(73) Proprietor: COMMISSARIAT À L'ÉNERGIE ATOMIQUE ET AUX ÉNERGIES ALTERNATIVES, 75015 Paris (FR); Aselta Nanographics, 38000 Grenoble (FR)
(72) Inventor: Saib, Mohamed, 38400 SAINT MARTIN D'HERES (FR); Fay, Aurélien, 38000 GRENOBLE (FR); Schiavone, Patrick, 38190 VILLARD BONNOT (FR); Figueiro, Thiago, 38000 GRENOBLE (FR)
(74) Representative: Marks & Clerk France

(56) References cited:
- US-A1- 2006 075 378
- US-A1- 2012 221 982
- GRANIK Y: "Correction for etch proximity: new models and applications", PROCEEDINGS OF SPIE, S P I E - INTERNATIONAL SOCIETY FOR OPTICAL ENGINEERING, US, vol. 4346, 1 January 2001 (2001-01-01), pages 98-112, XP002672763, ISSN: 0277-786X ISBN: 978-0-8194-9914-1

## Description

### FIELD OF THE INVENTION

The present invention notably applies to the field of electronic or optical lithography. It applies, among other processes, to mask write and direct write. It can also apply to other steps of semiconductor manufacturing processes, such as nanoimprint, DSA (Directed Self Assembly), etching, CMP (Chemical Mechanical Polishing/Planarization), annealing, baking, metrology, etc...

### BACKGROUND

During the process of mask write or direct write, several factors contribute to induce errors and prevent the achievement of the expected pattern fidelity. Some of these factors are the electron scattering (forward and backward), resist diffusion, resist thickness, etching, flare, fogging, metrology, etc. In order to improve the resolution and reduce the impact of these phenomena, there are several strategies of proximity effect correction (PEC), fogging effect correction (FEC), etching compensation, among others. The strategies are based on a prediction of the impact of each effect of a correction of these by means of dose and/or geometry compensation. Therefore, the quality of the correction depends upon the quality of the models used to predict the phenomena, said models being different from one manufacturing process to another. High precision of the model and the corrections can certainly be obtained, but at a high computation cost.

It has become common knowledge to use a decomposition of the model into two models, a first one to compute the corrections of the electronic proximity effects, and a second one to compute all the other corrections, often called the residual model or the resist model. The parameters of the residual model have to be calculated from the characteristics of the target design, so that the model accurately represents the differences between the various pattern configurations in the design. Space, CD and density normally give a good representation of these differences, but other are sometimes used, such as the exploration variables disclosed by Granik (Y. Granik, N. Cobb, "New Process Models for OPC at sub-90nm Nodes", Optical Microlithography XVI, proc. SPIE vol 5040, 2010).

Tools that can be used to calculate representative variables in the residual models are the visibility kernels, such as those disclosed by Sato (S. Sato, K. Ozawa, and F. Uesawa, "Dry-etch proximity function for model-based OPC beyond 65-nm node", proc. SPIE vol 6155, 2006), or Park (J.-G. Park, S.-W. Kim, S.-B. Shim, S.-S. Suh, and H.-K. Oh, "The effective etch process proximity correction methodology for improving on chip CD variation in 20 nm node DRAM gate', Design for Manufacturability though Design-Process Integration V, proc. SPIE vol 7974, 2011). Also, US patent applications published under n° US2010/269084, US2011/138343, US2012/221982 and US2006/075378 disclose visibility kernels to scan semiconductor designs.

The methods to implement these methods require the calculation of surface integrals within limits which vary with each part of the design under visibility. Also, the number of calculations is multiplied by the number of variables because CD and Space, and density, notably, each require a full surface integral calculation at all the points of interest.

There is therefore a need of an improvement of the kernel models which greatly alleviates the computation load, while giving an accurate representation of the variables.

### SUMMARY OF THE INVENTION

The invention solves this problem and alleviates the computing workload by calculating the metrics of the model by products of convolution of the target design and a new type of method wherein a kernel function is oriented by a deformation function using a shift angle and the characteristics of the design of the integrated circuit to be manufactured are calculated using a convolution across the whole design.

To this effect, the invention discloses A method of determining, by a computer, at least a component of a vector representing a metric of a process for manufacturing a semiconductor integrated circuit defined by a target design, said method being characterized in that it comprises: selecting at least a point of the target design as a point of interest (x, y); selecting a kernel function K(r) centered on the at least a point of interest, said kernel function depending on a radius; calculating over the target design at least a convolution of the target design and a compound of the kernel function K(r) and a deformation function f_{x,y}(θ, ϕ_{x,y}), said deformation function depending on the angle of interest and a selected shift angle ϕ_{x,y}; determining a value of the at least a component V(x,y) from the value of the convolution function at the at least a point of interest (x,y).

Advantageously, the at least a component is an external density of the target design at the point of interest, which is determined from a convolution function where the shift angle ϕ_{x,y} is selected to scan outside parts of the design from the point of interest.

Advantageously, the at least a component is an internal density of the target design at the point of interest, which is determined from a convolution function where the shift angle ϕ_{x,y}' is selected to scan inside parts of the design from the point of interest.

Advantageously, the shift angle ϕ_{x,y}' is equal to ϕ_{x,y}+π

Advantageously, the kernel function is an isotropic function.

Advantageously, the kernel function is a Gaussian function.

Advantageously, the deformation function is a compound of trigonometric functions selected to be null for values of the angle of interest higher than π.

Advantageously, the deformation function is a compound of one of squares and cubic powers of trigonometric functions selected to be null for values of the angle of interest higher than π.

Advantageously, the deformation function is replaced by a Fourier series development.

Advantageously, the Fourier series development is developed at a n^{th} order, n being selected so that the product of convolution developed at the n^{th} order is invariant across rotations around the point of interest, within a tolerance of the corrections to be applied to the target design.

Advantageously, the deformation function is replaced by a projection of a couple of basic kernel functions, said basic kernel functions with angular variations selected to scan the domain of variation of the shift angle ϕ_{x,y} across the target design.

Advantageously, the couple of basic kernel functions is selected so that the two selected basic kernel functions have angular variations which are above and under shift angle ϕ_{x,y}.

The invention also discloses a computer program for determining at least a component of a vector representing a metric of a process for manufacturing a semiconductor integrated circuit defined by a target design, said computer program being characterized in that it comprises: computer code for selecting at least a point of the target design as a point of interest; computer code for selecting a kernel function centered on the at least a point of interest, said kernel function depending on a radius; computer code for calculating over the target design at least a convolution function of the target design and a compound of the kernel function and a deformation function, said deformation function depending on the angle of visibility and a selected shift angle; computer code for determining a value of the at least a component from the value of the convolution function at the at least a point of interest.

The invention also discloses a semiconductor manufacturing equipment comprising a computer configured to run a computer program according to claim 13 and to use at least an output of a computer program according to the invention, said semiconductor manufacturing equipment configured for one of direct writing on semiconductor wafers, writing on a mask plate, etching, chemically or mechanically planarizing, or baking, annealing a semiconductor wafer, and inspecting a mask or semiconductor surface.

Another advantage of the invention is that a calculation of the product of convolution can still be quickened by using, instead of the deformation function, its development in Fourier series at an adequate order. Alternatively a decomposition of the product of convolution using a projection on an angular basis can also improve the speed of calculation. And in all cases, the use of a product of convolution allows a very effective factorization which again alleviates the computing workload. Also, the use of a shift angle is specifically advantageous in the case of free-form designs, for which the use of surface integrals is quasi impossible. In this case, simple rules can be used to adapt the optimal shift angle when going along the contour of a design to model.

### BRIEF DESCRIPTION OF THE DRAWINGS

The invention will be better understood and its various features and advantages will become apparent from the description of various embodiments and of the following appended figures:
- Figures 1a, 1b and 1c represent an isotropic kernel function, and its implementation to define an external visible surface and an internal visible surface, in a method of the prior art;
- Figures 2a, 2b and 2c represent an anisotropic kernel function, and its implementation to define an external visible surface and an internal visible surface, in another method of the prior art;
- Figures 3a, 3b, 3c, 3d, 3e and 3f respectively represent an oriented kernel, an external density function, an internal density function, computed by convolution, with no shift angle, and three different shift angles;
- Figures 4a, 4b, 4c and 4d respectively represent a deformation function, its Fourier series development at order 4, its Fourier series development at order 2 and a deformation function shifted by a specified angle, in a number of embodiments of the invention;
- Figure 5 illustrates a basis of 9 kernel functions used to project the product of convolution of the oriented kernel and a patterned design in a number of embodiments of the invention.

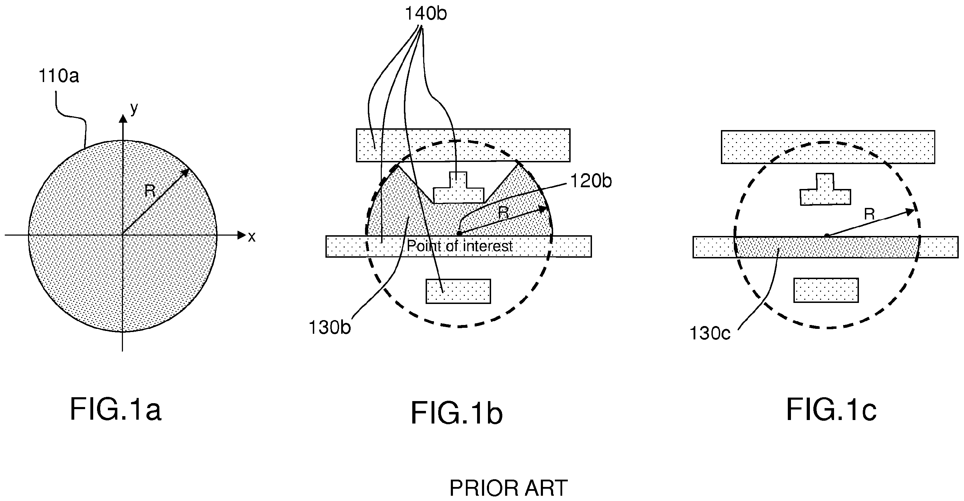

Figures 1a, 1b and 1c represent an isotropic kernel function, and its implementation to define an external visible surface and an internal visible surface, in a method of the prior art.

Figure 1a illustrates an isotropic area of interest 110a, which has a radius R.

Figure 1b illustrates an intersection 130b of the area of visibility 110a from a point of interest 120b with a set of target patterns 140b. This intersection is external to the set of target patterns and can be used, as explained below to define the Space variable as the ratio of the surface of the intersection 130b to the surface of the area of visibility 110a.

Figure 1c illustrates an intersection 130c of the area of visibility 110a from a point of interest 120b with a set of target patterns 140b. This intersection is internal to the set of target patterns and can be used, as explained below to define the CD variable as the ratio of the surface of the intersection 130c to the surface of the area of visibility 110a.

The surface 130b, 130c, is calculated using a double integral within the area of visibility 110a of a convolution of the target design, represented by a function of the radius and an angle, T(r,θ) with a Gaussian kernel function K(r): $S = ∯ K \left(r\right) . T \left(r, θ\right) . drdθ$

Notice that 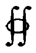 is the double integral bounded by the visible range viewed from point of interest. As shown in figures 1b, 1c, the boundary of the integral changes radically when the point of interest is moved, even of a few nanometers. Therefore, no factorization is possible and the calculation of the surface cannot be optimized for intensive computing.

In the case of a calculation of Space (visibility kernel), T(r,θ) is null inside the plain parts of the layout and non-zero elsewhere.

In the case of a calculation of CD (blocked kernel), T(r,θ) is null outside the plain parts of the layout and non-zero elsewhere.

The domain of integration is the surface which is visible from the point of interest. It is therefore to be noted that the limits of the domain of integration vary with each piece of the layout (i.e. with each point of interest) and that the procedure has to be repeated for all the points of interest (there may be as many as a few billions, in the case of complex layouts).

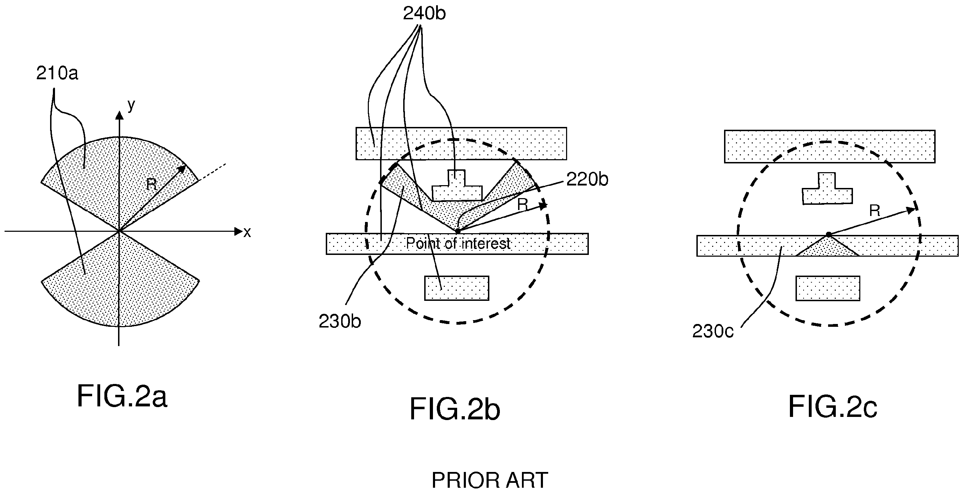

Figures 2a, 2b and 2c represent an anisotropic kernel function, and its implementation to define an external visible surface and an internal visible surface, in another method of the prior art.

These figures represent a variant of the previous art embodiment, wherein a deformation function, defined by an angle θ is introduced.

Figure 2a illustrates an anisotropic area of simulation 210a, which has a radius R, and a deformation angle θ.

Figure 2b illustrates an intersection 230b of the area of interest 210a from a point of interest 220b with a set of target patterns 240b. This intersection is external to the set of target patterns and can be used, as explained below to define the Space variable as the ratio of the surface of the intersection 230b to the surface of the area of interest 210a. .

Figure 2c illustrates an intersection 230c of the area of interest 210a from a point of interest 220b with a set of target patterns 240b. This intersection is internal to the set of target patterns and can be used, as explained below to define the CD variable as the ratio of the surface of the intersection 230c to the surface of the area of interest 210a.

The surface 230b, 230c, is calculated using a double integral within a subset of the area of interest 210a of a convolution of the target design, represented by a function of the radius and an angle, T(r,θ) with a Gaussian kernel function K(r) and a deformation function A(θ): $S = ∯ K \left(r\right) . A \left(θ\right) . T \left(r, θ\right) . drd θ$

Although the modified kernel improves the sensitivity of the metrics, it still cannot be used in intensive computation, because the integral calculation 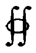 cannot be factorized. This limitation is still the consequence of radical changes in the boundary of subsequent integrals for each of two successive patterned designs.

As in the previous case, for a calculation of Space (visible kernel), T(r,θ) is null inside the plain parts of the layout and non-zero elsewhere.

For a calculation of CD (Blocked kernel), T(r,θ) is null outside the plain parts of the layout and non-zero elsewhere.

The domain of integration is the surface which is visible from the point of interest. This method has the advantage over the method of figures 1a, 1b and 1c to increase the accuracy of the representation of the target design, thanks to the deformation function A(θ). This is because it better takes into account the anisotropy, which characterizes most of IC manufacturing processes (which are not only shape dependent, but also direction dependent. But, It also suffers from the same disadvantages: the limits of the domain of integration vary with each piece of the layout (i.e. with each point of interest) and that the procedure has to be repeated for all the points of interest, which may mean billions, in the case of complex layouts.

The invention corrects the disadvantages of these methods of the prior art.

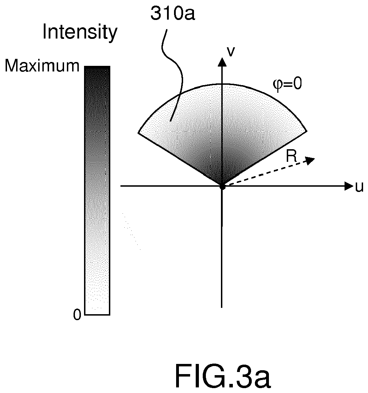

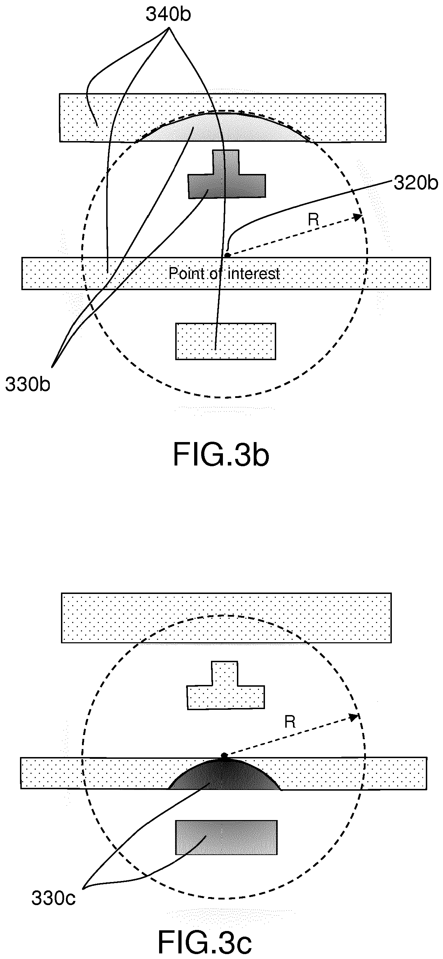

Figures 3a, 3b and 3c represent an oriented kernel, an external density function and an internal density function, in a number of embodiments of the invention.

Figure 3a illustrates an anisotropic area of interest 310a, which has a radius R, and a deformation angle θ.

Figure 3b illustrates an intersection 330b of the area under computation 310a from a point of interest 320b with a set of target patterns 340b. In this case, according to the invention, the computation extends across the whole area under computation, even though some areas are not visible from the point of interest. The result of the computation is used, as explained below to define an External Density.

Figure 3c illustrates an intersection 330c of the area under computation 310a rotated by the angle ϕ=π from a point of interest 320b with a set of target patterns 340b. In this case, according to the invention, the computation extends across the whole area under computation, even though some areas are not visible from the point of interest. The result of the computation is used, as explained below to define an Internal Density.

In contrast to the prior art, the External Density and the Internal Density are computed as a convolution denoted by *, across the whole target design. For each point of interest (x,y), one computes a product of convolution V(x,y) of the target design, represented by a function **L**(**x,y**) with an oriented kernel N(x,y) as: $V \left(x, y\right) = L \left(x, y\right) ∗ N \left(x, y\right)$ The convolution product calculation is given by: 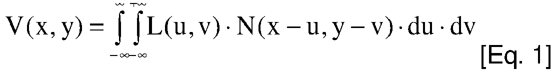 Where the oriented kernel N(u,v) can be split into two contributions: $N \left(u, v\right) = K \left(\sqrt{{u}^{2} + {v}^{2}}\right) ⋅ f \left(a tan\left(v/u\right)+φ\right)$ With: $K \left(\sqrt{{u}^{2} + {v}^{2}}\right)$ is the Gaussian kernel function, and *f*(*a* tan(*v*/*u*) + *ϕ*) is a deformation function.
The ϕ angle is the shift angle of the deformation function which varies according to the location (x,y) on the design.

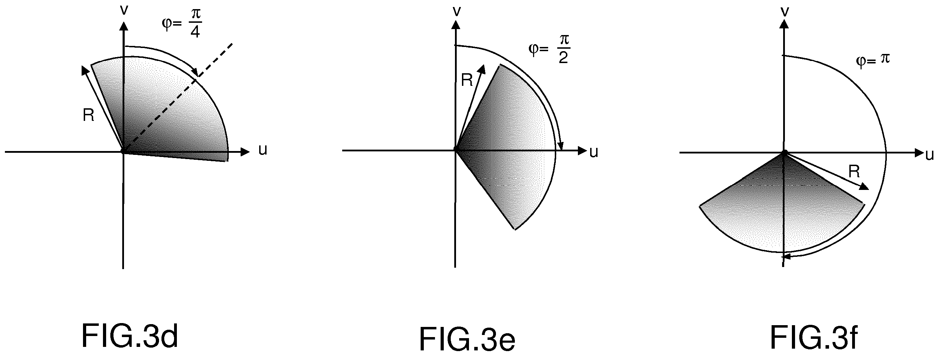

The ϕ angle has as reference, the axis for which the basis deformation function reaches its maximum. By way of example, we illustrate in figures 3d, 3e and 3f, three oriented kernel configurations, shifted from the reference kernel (figure 3a). The shift angle may vary in the range [0, 2π]. Notice that ϕ angle has only one possible value for (x,y) location. Thus, it can be considered as constant parameter for each V(x,y) calculation.

For convenience, in the following part of the description, the N(u,v) function will be written in polar coordinates as: $N \left(r, θ\right) = K \left(r\right) ⋅ f \left(θ+φ\right)$ Where the radius $r = \sqrt{{u}^{2} + {v}^{2}} ,$ and θ = a tan(v/u).

In the case of a calculation of an External Density, **f**(**θ** + **ϕ**) is configured so that the kernel is oriented towards the outside of the pattern. Indeed if ϕ is replaced by *ϕ* + π, the Internal Density can be computed in parallel with External Density without further cost of calculation.

Likewise, in the case of a calculation of an Internal Density, **f**(**θ** + **ϕ**) is configured so that the kernel is oriented towards the inside of the design. Indeed if ϕ is replaced by *ϕ* + π, the External Density can be computed in parallel with Internal Density without further cost of calculation.

The shift angle *ϕ* is selected as the angle of view from the point of interest to the vertical axis on the design which maximizes the sensitivity of the product of convolution to the estimated metrics (Space or CD). In the case of a Manhattan patterned design (i.e. with perpendicular lines), the adequate shift angle will be π/2 (3π/2) or 3π/2 (π/2), when the point of interest is on the right (left) edge of a vertical line and the observation is respectively to the outside or the inside of the design. When the point of interest is on the bottom (top) edge of a horizontal line of a Manhattan patterned design, the adequate shift angle will be π (zero) or zero (π), when the observation is respectively to the outside or the inside of the design.

More generally, a preferred rule is that the shift angle ϕ of the deformation function is selected as being optimal for the area of the patterned design (Manhattan or free-form, for instance). When moving the point of interest along an edge of a patterned design, in an area where the normal to the edge can be defined (i.e. the tangent to the edge is continuous), ϕ is defined as the angle of the normal to the edge to the direction of reference.

At a point of discontinuity, in a preferred embodiment, the shift angle can be defined as the angle between the bisectrix of the external angle of the two segments at the point of discontinuity and the direction of reference.

Therefore, according to the invention, there is no surface integration procedure which is performed on all the parts of the design for the whole design, as is the case in the methods of the prior art. Only a single convolution function is calculated across the whole design. The computation is therefore much more efficient. Also, the External Density and the Internal Density calculations can be performed at the same time in the memory of the computer.

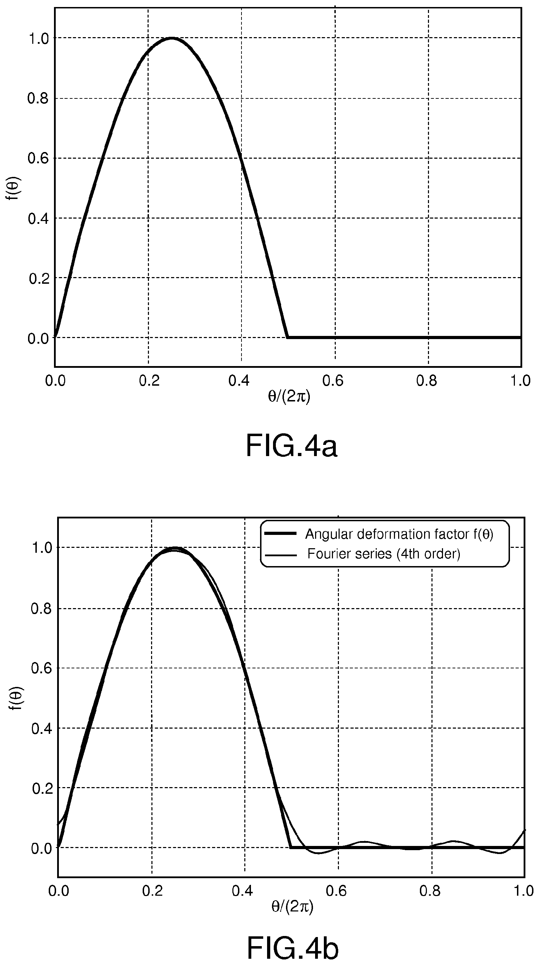

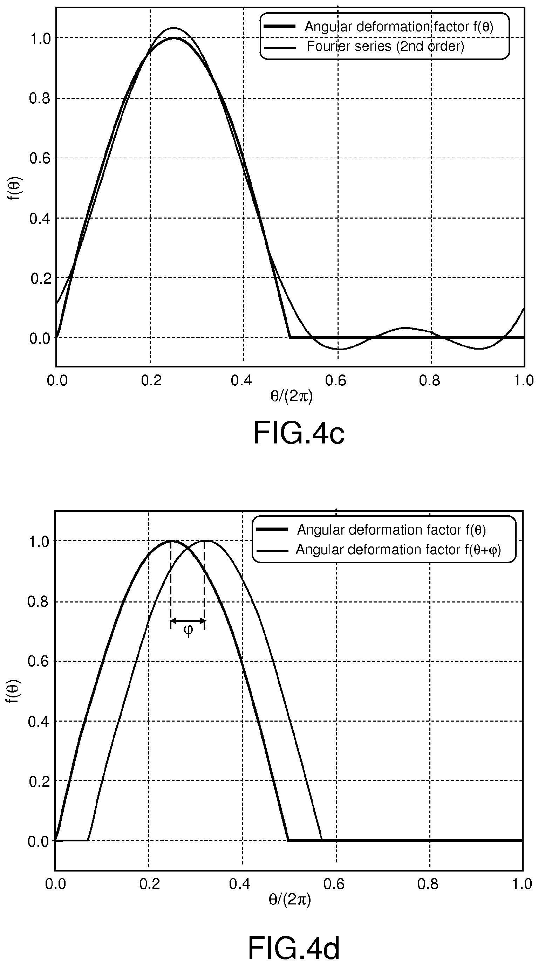

Figures 4a, 4b, 4c and 4d respectively represent a deformation function, its Fourier series development at order 4, its Fourier series development at order 2 and a deformation function shifted by a specified angle, in a number of embodiments of the invention.

Figure 4a illustrates the deformation function **f**(**θ** + **ϕ**), with a shift angle ϕ equal to zero. By way of example, only, the deformation function can be of the type illustrated on the figure, where the function **f**(**θ** + **ϕ**) is zero for all values of θ in the [π, 2π] interval, and is positive on the [0, π], with a maximum for θ=π/2. In this case, **f**(**θ** + **ϕ**)can advantageously be a combination of truncated basic trigonometric functions. But other functions, with different values for different intervals may be selected, or different powers, as a function of the target design and the specific process to be modeled. For instance, if more directivity than the one allowed by simple trigonometric functions is needed, square or cubic sine or cosine functions can be advantageously used..

Advantageously, the deformation function **f**(**θ** + **ϕ**) can be replaced by its Fourier series development at order n, which is expressed by the following expressions: [Eq. 2] $f \left(θ+φ\right) = {\sum }_{n = 0}^{∞} \left({a}_{n}.cos\left(nθ+nφ\right)+{b}_{n}.sin\left(nθ+nφ\right)\right)$ Where the Fourier coefficients aₙ and bₙ are given by the following formulas: [Eq. 3] ${a}_{n} = \frac{1}{π} {\int }_{0}^{2 π} f \left(θ+φ\right) . cos \left(nθ+nφ\right) dθ$ And [Eq. 4] ${b}_{n} = \frac{1}{π} {\int }_{0}^{2 π} f \left(θ+φ\right) . sin \left(nθ+nφ\right) dθ$

Figure 4b demonstrates that the deformation function **f**(**θ** + **ϕ**) with ϕ=0 of figure 4a, is very well approximated by a Fourier series development at order 4. But another order may be selected, as a function of the specific target design and of the specific process to be modeled.

Figure 4c represents an approximation of the same deformation function by a Fourier series development at order 2. The figure demonstrates that, in the case of this example, an order 2 development can be quite accurate. Advantageously, the order of the development will be selected so that, over a number of representative patterned designs, the approximation remains invariant by rotation within the tolerance of the correction to be modeled. And of course, the lesser the order of the development, the more efficient the computation will be.

Figure 4d illustrates an embodiment of the invention where the shift angle *ϕ* is different from zero.

In this embodiment, the oriented metric V(x,y) is defined by Equation 1, with the same notations as defined above.

Developing the expression of V(x,y), using the Fourier series development Equations 2 and 3 above, gives the following expression: [Eq. 5] $V \left(x, y\right) = {\sum }_{n = 0}^{m} \left(\left({a}_{n}⋅cos\left(nφ\right)+{b}_{n}⋅sin\left(nφ\right)\right)⋅{\int }_{- ∞}^{∞} {\int }_{- ∞}^{∞} K \left(\sqrt{{\left(x-u\right)}^{2} + {\left(y-v\right)}^{2}}\right) ⋅ cos \left(n⋅a tan\left(\left(y-v\right)/\left(x-u\right)\right)⋅L\left(u, v\right).dudv\right) + \left(-{a}_{n}⋅sin\left(nφ\right)+{b}_{n}⋅cos\left(nφ\right)\right) ⋅ {\int }_{- ∞}^{∞} {\int }_{∞}^{∞} K \left(\sqrt{{\left(x-u\right)}^{2} + {\left(y-v\right)}^{2}}\right) ⋅ sin \left(n⋅a tan\left(\left(y-v\right)/\left(x-u\right)\right)\right) ⋅ L \left(u, v\right) . dudv\right) )$

The integrals in the expression above do not depend on angle *ϕ*. Therefore, the integrals of Equation 5 may be pre-calculated, stored in tables, and then used in the calculation of V(x,y) with the coefficients aₙ and bₙ of the Fourier series development and the trigonometric functions of *ϕ*.

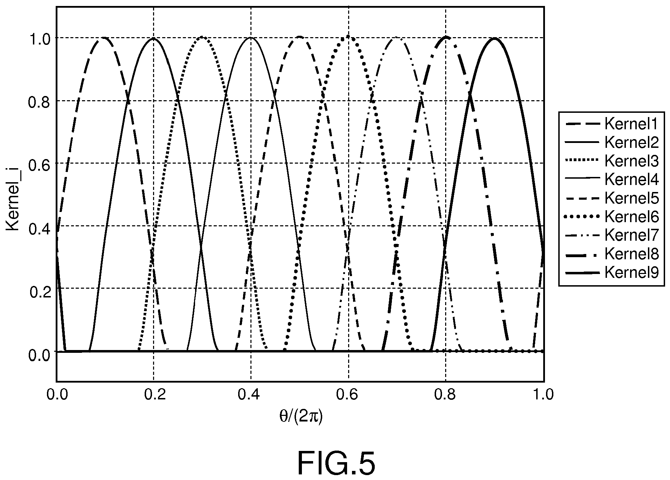

Figure 5 illustrates a basis of 9 kernel functions used to project the product of convolution of the oriented kernel and a patterned design in a number of embodiments of the invention.

As an alternative to the development of the Fourier series as commented above, another basis of decomposition of the product of convolution V(x,y). In this exemplary embodiment, the product of convolution is decomposed into nine basic kernel functions, which can be sine or cosine functions, or among others squares or cubic functions thereof, which are all defined by a different angle. When computing the product of convolution for a definite shift angle, the two basic kernels with angles on each side of the shift angle are used to compute the product of convolution by projection on the direction of reference of the patterned design.

The figure is only illustrative of one embodiment among a plurality: for instance the number of kernels may be chosen as low as 3 or as high as a few tens, depending upon the precision which is required by the application.

The method of the invention may be used in many use cases in the manufacturing process of semiconductor ICs. More specifically, it is well suited for certain types of e-beam lithography processes to replace a method wherein the proximity effect corrections are calculated through a simulation which is decomposed in a first step wherein a convolution between a Point Spread Function (PSF) and the design and a second step wherein the resist threshold is taken into account. A more precise resist model, which can be adjusted to any type of process signature is very efficient. This is especially the case to model e-beam lithography processes after etching and/or when extreme ultra-violet (EUV) masks are used. This is because extreme UV are covered by an heavy metal layer (Tantalium or tantalium nitride) which creates significant back-scattering effects.

Also, the metrics of the invention can be used to calibrate a differential model as is disclosed by European patent application EP 2014 0 305 835 filed this same day assigned to one of the applicants, titled "Method for determining the parameters of an IC manufacturing process by a differential procedure".

This is also valid when a more precise model of the lithography step is needed, or for direct write applications.

The examples disclosed in this specification are only illustrative of some embodiments of the invention. They do not in any manner limit the scope of said invention which is defined by the appended claims.

## Claims

1. A method of determining, by a computer, at least a component of a vector representing a metric of a process for manufacturing a semiconductor integrated circuit defined by a target design (340b), said method being **characterized in that** it comprises:
- Selecting at least a point of the target design as a point of interest (x, y), (320b);
- Selecting a kernel function K(r) centered on the at least a point of interest, said kernel function depending on a radius;
- Calculating over the target design (320b) at least a convolution of the target design and a compound of the kernel function K(r) and a deformation function f_{x,y}(θ, ϕ_{x,y}), said deformation function depending on the angle of interest and a selected shift angle ϕ_{x,y};
- Determining a value of the at least a component V(x,y) from the value of the convolution function at the at least a point of interest (x,y), (320b).

2. The method of claim 1, wherein the at least a component is an external density of the target design at the point of interest, which is determined from a convolution function where the shift angle ϕ_{x,y} is selected to scan outside parts of the design from the point of interest.

3. The method of claim 1, wherein the at least a component is an internal density of the target design at the point of interest, which is determined from a convolution function where the shift angle ϕ_{x,y}' is selected to scan inside parts of the design from the point of interest.

4. The method of claims 2 and 3, wherein the shift angle ϕ_{x,y} is equal to ϕ_{x,y}+π

5. The method of one of claims 1 to 4, wherein the kernel function is an isotropic function.

6. The method of claim 5, wherein the kernel function is a Gaussian function.

7. The method of one of claims 1 to 6, wherein the deformation function is a compound of trigonometric functions selected to be null for values of the angle of interest higher than π.

8. The method of one of claims 1 to 6, wherein the deformation function is a compound of one of squares and cubic powers of trigonometric functions selected to be null for values of the angle of interest higher than π.

9. The method of one of claims 1 to 8, wherein the deformation function is replaced by a Fourier series development.

10. The method of claim 9, wherein the Fourier series development is developed at a n^{th} order, n being selected so that the product of convolution developed at the n^{th} order is invariant across rotations around the point of interest, within a tolerance of the corrections to be applied to the target design.

11. The method of one of claims 1 to 8, wherein the deformation function is replaced by a projection of a couple of basic kernel functions, said basic kernel functions with angular variations selected to scan the domain of variation of the shift angle ϕ_{x,y} across the target design.

12. The method of claim 11, wherein the couple of basic kernel functions is selected so that the two selected basic kernel functions have angular variations which are above and under shift angle ϕ_{x,y}.

13. A computer program for determining at least a component of a vector representing a metric of a process for manufacturing a semiconductor integrated circuit defined by a target design, said computer program being **characterized in that** it comprises:
- Computer code for selecting at least a point of the target design as a point of interest;
- Computer code for selecting a kernel function centered on the at least a point of interest, said kernel function depending on a radius;
- Computer code for calculating over the target design at least a convolution function of the target design and a compound of the kernel function and a deformation function, said deformation function depending on the angle of visibility and a selected shift angle;
- Computer code for determining a value of the at least a component from the value of the convolution function at the at least a point of interest.

14. A semiconductor manufacturing equipment comprising a computer configured to run a computer program according to claim 13 and to use at least an output of a computer program according to claim 13, said semiconductor manufacturing equipment configured for one of direct writing on semiconductor wafers, writing on a mask plate, etching, chemically or mechanically planarizing, or baking, annealing a semiconductor wafer, and inspecting a mask or semiconductor surface.

## Patentansprüche

1. Verfahren zum Bestimmen, durch einen Computer, mindestens einer Komponente eines Vektors, der eine Metrik eines Verfahrens zur Herstellung einer durch ein Zieldesign (340b) definierten integrierten Halbleiterschaltung darstellt, wobei das Verfahren **dadurch gekennzeichnet ist, dass** es Folgendes beinhaltet:
- Auswählen mindestens eines Punktes des Zieldesigns als einen Punkt von Interesse (x,y), (320b);
- Auswählen einer Kernel-Funktion K(r), die auf dem mindestens einen Punkt von Interesse zentriert ist, wobei die Kernel-Funktion von einem Radius abhängt;
- Berechnen, über das Zieldesign (320b), mindestens einer Faltung des Zieldesigns und einer Kombination aus der Kernel-Funktion K(r) und einer Deformationsfunktion f_{x,y}(θ,ϕ_{x,y}), wobei die Deformationsfunktion von dem Winkel von Interesse und einem ausgewählten Verschiebungswinkel ϕ_{x,y} abhängt;
- Bestimmen eines Wertes der mindestens einen Komponente V(x,y) aus dem Wert der Faltungsfunktion an dem mindestens einen Punkt von Interesse (x,y), (320b).

2. Verfahren nach Anspruch 1, wobei die mindestens eine Komponente eine externe Dichte des Zieldesigns an dem Punkt von Interesse ist, die aus einer Faltungsfunktion bestimmt wird, wobei der Verschiebungswinkel ϕ_{x,y} zum Scannen äußerer Teile des Designs von dem Punkt von Interesse gewählt wird.

3. Verfahren nach Anspruch 1, wobei die mindestens eine Komponente eine interne Dichte des Zieldesigns an dem Punkt von Interesse ist, die aus einer Faltungsfunktion bestimmt wird, wobei der Verschiebungswinkel ϕ_{x,y}' zum Scannen innerer Teile des Designs von dem Punkt von Interesse gewählt wird.

4. Verfahren nach den Ansprüchen 2 und 3, wobei der Verschiebungswinkel ϕ_{x,y}' gleich ϕ_{x,y} +π ist.

5. Verfahren nach einem der Ansprüche 1 bis 4, wobei die Kernel-Funktion eine isotrope Funktion ist.

6. Verfahren nach Anspruch 5, wobei die Kernel-Funktion eine Gaußsche Funktion ist.

7. Verfahren nach einem der Ansprüche 1 bis 6, wobei die Deformationsfunktion eine Kombination aus trigonometrischen Funktionen ist, die so gewählt ist, dass sie für Werte größer als π des Winkels von Interesse null ist.

8. Verfahren nach einem der Ansprüche 1 bis 6, wobei die Deformationsfunktion eine Kombination aus einer von quadratischen und kubischen Potenzen von trigonometrischen Funktionen ist, die so gewählt ist, dass sie für Werte größer als π des Winkels von Interesse null ist.

9. Verfahren nach einem der Ansprüche 1 bis 8, wobei die Deformationsfunktion durch eine Fourier-Serienentwicklung ersetzt wird.

10. Verfahren nach Anspruch 9, wobei die Fourier-Serienentwicklung bei einer n-ten Ordnung entwickelt wird, wobei n so gewählt wird, dass das bei der n-ten Ordnung entwickelte Faltungsprodukt über Rotationen um den Punkt von Interesse innerhalb einer Toleranz der auf das Zieldesign anzuwendenden Korrekturen invariant ist.

11. Verfahren nach einem der Ansprüche 1 bis 8, wobei die Deformationsfunktion durch eine Projektion von ein paar Kernel-Grundfunktionen ersetzt wird, wobei die Kernel-Grundfunktionen mit Winkelvariationen zum Scannen des Variationsbereichs des Verschiebungswinkels ϕ_{x,y} über das Zieldesign ausgewählt werden.

12. Verfahren nach Anspruch 11, wobei das Paar von Kernel-Grundfunktionen so gewählt ist, dass die zwei gewählten Kernel-Grundfunktionen Winkelbereiche haben, die über und unter dem Verschiebungswinkels ϕ_{x,y} liegen.

13. Computerprogramm zum Bestimmen mindestens einer Komponente eines Vektors, der eine Metrik eines Verfahrens zur Herstellung einer durch ein Zieldesign definierten integrierten Halbleiterschaltung darstellt, wobei das Computerprogramm **dadurch gekennzeichnet ist, dass** es Folgendes umfasst:
- Computercode zum Auswählen mindestens eines Punktes des Zieldesigns als einen Punkt von Interesse;
- Computercode zum Auswählen einer Kernel-Funktion, die auf dem mindestens einen Punkt von Interesse zentriert ist, wobei die Kernel-Funktion von einem Radius abhängt;
- Computercode zum Berechnen, über das Zieldesign, mindestens einer Faltungsfunktion des Zieldesigns und einer Kombination aus der Kernel-Funktion und einer Deformationsfunktion, wobei die Deformationsfunktion vom Sichtbarkeitswinkel und einem ausgewählten Verschiebungswinkel abhängt;
- Computercode zum Bestimmen eines Wertes der mindestens einen Komponente aus dem Wert der Faltungsfunktion an dem mindestens einen Punkt von Interesse.

14. Halbleiterherstellungsvorrichtung mit einem Computer, der zum Abarbeiten eines Computerprogramms nach Anspruch 13 und zum Verwenden mindestens einer Ausgabe eines Computerprogramms nach Anspruch 13 konfiguriert ist, wobei die Halbleiterherstellungsvorrichtung zum direkten Schreiben auf Halbleiterwafer, Schreiben auf eine Maskenplatte, Ätzen, chemischen oder mechanischen Planarisieren oder Brennen, Glühen eines Halbleiterwafer und Inspizieren einer Maske oder Halbleiteroberfläche konfiguriert ist.

## Revendications

1. Procédé de détermination, par un ordinateur, d'au moins une composante d'un vecteur représentant une métrique d'un procédé pour la fabrication d'un circuit intégré à semi-conducteur défini par un modèle cible (340b), ledit procédé étant **caractérisé en ce qu'**il comprend :
- la sélection d'au moins un point du modèle cible comme point d'intérêt (x,y), (320b) ;
- la sélection d'une fonction noyau K(r) centrée sur le au moins un point d'intérêt, ladite fonction noyau dépendant du rayon ;
- le calcul sur le modèle cible (320b) d'au moins une convolution du modèle cible et d'un composé de la fonction noyau K(r) et d'une fonction de déformation f_{x,y}(θ,ϕ_{x,y}), ladite fonction de déformation dépendant de l'angle d'intérêt et d'un angle de décalage sélectionné ϕ_{x,y ;}
- la détermination d'une valeur de l'au moins une composante V(x,y) à partir de la valeur de la fonction de convolution au niveau de l'au moins un point d'intérêt (x,y), (320b).

2. Procédé selon la revendication 1, dans lequel la au moins une composante est une densité externe du modèle cible au niveau du point d'intérêt, qui est déterminée à partir d'une fonction de convolution où l'angle de décalage ϕ_{x,y} est sélectionné pour balayer des parties extérieures du modèle à partir du point d'intérêt.

3. Procédé selon la revendication 1, dans lequel la au moins une composante est une densité interne du modèle cible au niveau du point d'intérêt, qui est déterminée à partir d'une fonction de convolution où l'angle de décalage ϕ_{x,y}' est sélectionné pour balayer des parties intérieures du modèle à partir du point d'intérêt.

4. Procédé selon les revendications 2 et 3, dans lequel l'angle de décalage ϕ_{x,y}' est égal à ϕ_{x,y} + π.

5. Procédé selon l'une quelconque des revendications 1 à 4, dans lequel la fonction noyau est une fonction isotrope.

6. Procédé selon la revendication 5, dans lequel la fonction noyau est une fonction Gaussienne.

7. Procédé selon l'une quelconque des revendications 1 à 6, dans lequel la fonction de déformation est un composé de fonctions trigonométriques sélectionné afin d'être nul pour des valeurs d'angle d'intérêt supérieures à π.

8. Procédé selon l'une quelconque des revendications 1 à 6, dans lequel la fonction de déformation est un composé d'une de puissances carrées et cubes de fonctions trigonométriques sélectionné afin d'être nul pour des valeurs d'angle d'intérêt supérieures à π.

9. Procédé selon l'une quelconque des revendications 1 à 8, dans lequel la fonction de déformation est remplacée par un développement de série de Fourier.

10. Procédé selon la revendication 9, dans lequel le développement d'une série de Fourier est développé à un n^{ième} ordre, n étant sélectionné de sorte que le produit de convolution développé au n^{ième} ordre soit invariable à travers les rotations autour du point d'intérêt, dans une tolérance de corrections à appliquer au modèle cible.

11. Procédé selon l'une quelconque des revendications 1 à 8, dans lequel la fonction de déformation est remplacée par une projection d'une paire de fonctions noyaux basiques, lesdites fonctions noyaux basiques présentant des variations angulaires étant sélectionnées pour balayer le domaine de variation de l'angle de décalage ϕ_{x,y} à travers le modèle cible.

12. Procédé selon la revendication 11, dans lequel la paire de fonctions noyaux basiques est sélectionnée de sorte que les deux fonctions noyaux basiques sélectionnées présentent des variations angulaires qui sont supérieures et inférieures à l'angle de décalage ϕ_{x,y}

13. Programme d'ordinateur permettant de déterminer au moins un composant d'un vecteur représentant une métrique d'un procédé de fabrication d'un circuit intégré à semi-conducteur défini par un modèle cible, ledit programme d'ordinateur étant **caractérisé en ce qu'**il comprend :
- un code informatique permettant de sélectionner au moins un point du modèle cible comme point d'intérêt ;
- un code informatique permettant de sélectionner une fonction noyau centrée sur le au moins un point d'intérêt, ladite fonction noyau dépendant d'un rayon ;
- un code informatique permettant de calculer sur le modèle cible au moins une fonction de convolution du modèle cible et un composé de la fonction noyau et d'une fonction de déformation, ladite fonction de déformation dépendant de l'angle de visibilité et d'un angle de décalage sélectionné ;
- un code informatique permettant de déterminer une valeur de l'au moins une composante à partir de la valeur de la fonction de convolution au niveau de l'au moins un point d'intérêt.

14. Équipement de fabrication de semi-conducteur comprenant un ordinateur configuré pour exécuter un programme d'ordinateur selon la revendication 13 et pour utiliser au moins un résultat d'un programme d'ordinateur selon la revendication 13, ledit équipement de fabrication de semi-conducteur étant configuré pour une écriture directe sur des tranches de semi-conducteur, une écriture sur une plaque de masque, une gravure, un aplanissement chimique ou mécanique, ou une cuisson, un recuit d'une tranche de semi-conducteur, et l'inspection d'un masque ou d'une surface de semi-conducteur.
